# EUROPÄISCHE PATENTANMELDUNG

(11) **EP 1 008 492 A1**
(43) Veröffentlichungstag der Anmeldung: **14.06.2000**
(21) Anmeldenummer: 99122267.0
(22) Anmeldetag: 08.11.1999
(51) Int. Cl.: B60R 13/02, B60K 37/00

(54) **Verkleidungselement für den Innenausbau, insbesondere von Kraftfahrzeugen**

(30) Priorität: 09.12.1998 DE 29821991 U
(71) Anmelder: Delphi Technologies, Inc., Troy, MI 48007 (US)
(72) Erfinder: Kansteiner, Udo, 58456 Witten (DE); Kerkhoff, Markus, 42285 Wuppertal (DE)
(74) Vertreter: Manitz, Finsterwald & Partner

(57) **Zusammenfassung**

Die Erfindung bezieht sich auf ein Verkleidungselement für den Innenausbau, insbes. von Kraftfahrzeugen, das aus mehreren Teilen, z. B. einem Überzug, einem Tragkörper und einem Schaumteil, aufgebaut ist. Um ein solches Verkleidungselement für den Innenausbau gut und kostengünstig wiederverwerten zu können, wird vorgeschlagen, daß alle Teile aus dem gleichen Material bestehen.

## Beschreibung

Die Erfindung betrifft ein Verkleidungselement für den Innenausbau, insbesondere von Kraftfahrzeugen, das aus mehreren Teilen, z. B. einem Überzug, einem Schaumteil und einem Tragkörper, aufgebaut ist.

Solche Verkleidungselemente sind bei Kraftfahrzeugen z. B. als Armaturentafeln, bekannt und zur Aufnahme von Funktionselementen, wie Airbag, Anzeigeinstrumenten, Lenksäule, Lüftungsdüsen, Radio usw. ausgelegt. Die einzelnen Verkleidungselemente bestehen üblicherweise aus mehreren Teilen, z. B. einem Überzug, einem Schaumteil und einem Tragkörper, die fest und dauerhaft miteinander verbunden sind. Aufgrund unterschiedlicher Anforderungen werden die einzelnen Teile der Verkleidungselemente bisher aus verschiedenen Materialien hergestellt. Dies führt zu einem schlechten und kostenintensiven Recycling, da die einzelnen Teile vor dem Recycling zunächst voneinander getrennt werden müssen und erst danach getrennt einer Wiederverwertung zugeführt werden können. Weiterhin sind die Tragkörper der einzelnen Verkleidungselemente relativ schwer sein, um eine sichere Lagerung der aufzunehmenden Funktionselemente zu gewährleisten.

Der vorliegenden Erfindung liegt daher die Aufgabe zugrunde, ein Verkleidungselement für den Innenausbau der vorstehend erläuterten Art zur Verfügung zu stellen, das gut und kostengünstig wiederverwertet werden kann.

Diese Aufgabe wird bei einem Verkleidungselement für den Innenausbau der vorstehend erläuterten Art dadurch gelöst, daß alle Teile aus der gleichen Materialfamilie, vorzugsweise dem gleichen Material bestehen.

Diese Ausgestaltung hat den Vorteil, daß die Verkleidungselemente besser wiederverwertet werden können, da ihre einzelnen Teile alle zur gleichen Materialfamilie gehören und somit nicht mehr voneinander getrennt werden müssen. Dadurch können auch die immer schärfer werdenden Vorschriften und Gesetze bezüglich einer Wiederverwertung besser eingehalten werden. Weiterhin gehen die Kosten für das Recycling zurück, da ein Trennen der einzelnen Teile voneinander entfällt.

Nach einer besonderen Ausgestaltung bestehen alle Teile aus expandiertem Polypropylen (EPP). Da expandiertes Polypropylen (EPP) gegenüber den herkömmlich verwendeten Werkstoffen um ca. 30% leichter ist, wird auch das gesamte Verkleidungselement leichter. Weiterhin können Teile aus expandiertem Polypropylen (EPP) eine Kombination von mehreren verschiedenen spezifischen Gewichten des gleichen Materials garantieren, so daß gleichzeitig eine gute Haptik erreicht wird.

Nach einer alternativen Ausgestaltung können alle Teile auch aus Polyurethan bestehen. Dies führt ebenfalls zu den vorstehend beschriebenen Vorteilen.

Nach einer weiteren vorteilhaften Ausgestaltung ist es möglich, die Funktion des Tragkörpers des Verkleidungselementes in das EPP-Bauteil zu integrieren, so daß auf einen separaten Tragkörper verzichtet werden kann. Besonders gut läßt sich dies verwirklichen, wenn nach einer weiteren vorteilhaften Ausgestaltung expandiertes Polypropylen (EPP) oder Polyurethan von hohem spezifischem Gewicht, beispielsweise etwa 50 bis 100 g/l verwendet wird.

Nach einer besonders vorteilhaften Ausgestaltung können Befestigungselemente einstückig mit dem Verkleidungselement oder mit Teilen des Verkleidungselementes hergestellt werden. Dies führt zu einer weiteren Kostenreduzierung bei der Herstellung.

Weitere Einzelheiten und Vorteile ergeben sich aus der nachfolgenden Beschreibung. Es zeigen:

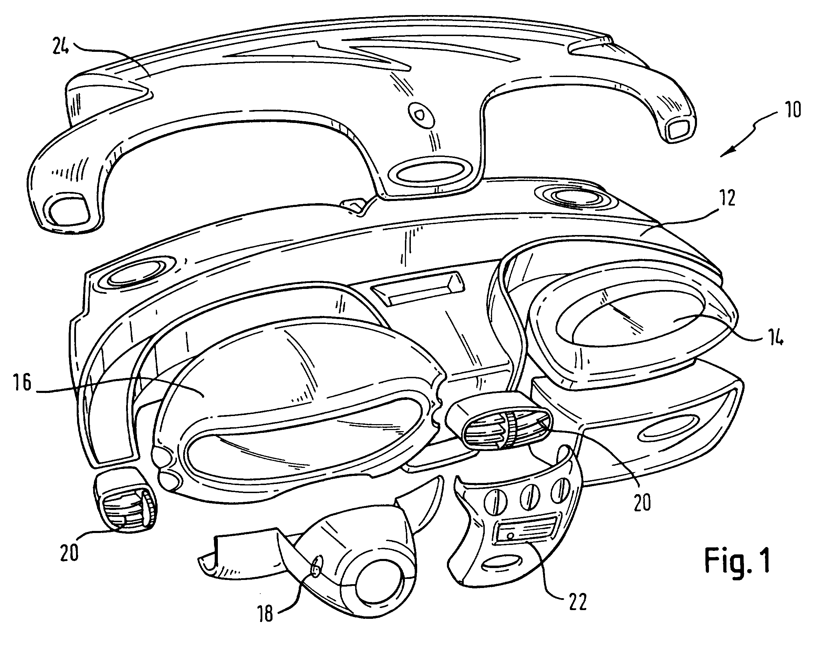

- Fig. 1: ein als Armaturentafel ausgebildetes Verkleidungselement nach der vorliegenden Erfindung.

Fig. 1 zeigt eine Armaturentafel 10 für ein Kraftfahrzeug, an der beispielhaft das erfindungsgemäße Verkleidungselement erläutert werden soll. Selbstverständlich können auch andere Verkleidungselemente in der beanspruchten Weise ausgeführt und hergestellt sein.

Fig. 1 zeigt eine Armaturentafel 10, die einen Grundkörper 12 zur Aufnahme von Funktionselementen, wie einem Airbag 14 , einem Instrumentenmodul 16 zur Aufnahme verschiedener Anzeigeinstrumente, einer Lenksäulenverkleidung 18, Lüftungsdüsen 20, einer Radiokonsole 22 und einer Abdeckung 24 aufweist.

Die Abdeckung 24 besteht aus zwei Schichten, z. B. aus einem Überzug und einem Schaumteil, die zu einem Formteil vereinigt sind. An dem Formteil sind außerdem Befestigungselemente, beispielsweise Schnapp- oder Rastverbindungen, o. dgl. vorgesehen, die einstückig mit diesem ausgebildet sind und die beispielsweise zur Befestigung der einzelnen Verkleidungselemente untereinander oder der Funktionselemente oder zur Befestigung des Formteiles selbst dienen.

Alle Teile des Verkleidungselementes, d.h. die Abdeckung 24 und der Grundkörper 12 bestehen aus dem gleichen Material, vorzugsweise aus expandiertem Polypropylen (EPP). Das Formteil kann ein hohes und der Überzug ein niedrigeres spezifisches Gewicht aufweisen. Alternativ können alle Teile des Verkleidungselementes auch aus Polyurethan bestehen.

Ferner können Abdeckung 24 und Grundkörper 12 auch integriert ausgebildet werden, wodurch ein einziges Formteil entsteht und ein separater Grundkörper entfallen kann.

### Bezugszeichenliste:

- 10: Armaturentafel
- 12: Grundkörper
- 14: Airbag
- 16: Instrumentenmodul
- 18: Lenksäulenverkleidung
- 20: Lüftungsdüsen
- 22: Radiokonsole
- 24: Abdeckung

## Patentansprüche

1. Verkleidungselement (24) für den Innenausbau, insbesondere von Kraftfahrzeugen, das aus mehreren Teilen, z. B. einem Überzug, einem Schaumteil und einem Tragkörper, aufgebaut ist, dadurch gekennzeichnet, daß alle Teile aus der gleichen Materialfamilie, vorzugsweise aus dem gleichen Material bestehen.

2. Verkleidungselement nach Anspruch 1, dadurch gekennzeichnet, daß alle Teile aus expandiertem Polypropylen (EPP) bestehen.

3. Verkleidungselement nach Anspruch 1, dadurch gekennzeichnet, daß dieses eine Armaturentafel (24) aufweist.

4. Verkleidungselement nach wenigstens einem der Ansprüche 1 bis 3, dadurch gekennzeichnet, daß der Tragkörper und/oder das Schaumteil und/oder der Überzug zu einem einzigen Formteil vereinigt sind.

5. Verkleidungselement nach wenigstens einem der Ansprüche 1 bis 4, dadurch gekennzeichnet, daß Teile des Verkleidungselementes aus expandiertem Polypropylen (EPP) von hohem spezifischem Gewicht oder aus Polyurethan von hohem spezifischem Gewicht bestehen.

6. Verkleidungselement nach wenigstens einem der Ansprüche 1 bis 5, dadurch gekennzeichnet, daß Befestigungselemente o. dgl. einstückig mit dem Verkleidungselement (24) hergestellt sind.

7. Verkleidungselement nach wenigstens einem der Ansprüche 1 bis 6, dadurch gekennzeichnet, daß die Teile ein unterschiedliches spezifisches Gewicht aufweisen.

8. Verkleidungselement nach wenigstens einem der Ansprüche 1 bis 7, dadurch gekennzeichnet, daß dieses keinen Tragkörper aufweist, wobei die Teile vorzugsweise aus einem Material mit hohem spezifischen Gewicht, insbesondere einem spezifischen Gewicht von mehr als 50 g/l, hergestellt sind.
